# EUROPÄISCHE PATENTSCHRIFT

(11) **EP 2 983 896 B1**
(45) Veröffentlichungstag und Bekanntmachung des Hinweises auf die Patenterteilung: **12.04.2017**
(21) Anmeldenummer: 14723034.6
(22) Anmeldetag: 02.05.2014
(51) Int. Cl.: B29C 67/00, B22F 3/105

(54) **ANLAGE ZUM SELEKTIVEN LASERSCHMELZEN MIT DREHENDER RELATIVBEWEGUNG ZWISCHEN PULVERBETT UND PULVERVERTEILER**
SYSTEM FOR SELECTIVE LASER MELTING HAVING ROTATING RELATIVE MOVEMENT BETWEEN POWDER BED AND POWDER DISTRIBUTOR
INSTALLATION DE FUSION SÉLECTIVE PAR LASER À MOUVEMENT RELATIF ROTATIF ENTRE UN LIT DE POUDRE ET UN DISTRIBUTEUR DE POUDRE

(30) Priorität: 03.06.2013 DE 102013210242
(43) Veröffentlichungstag der Anmeldung: 17.02.2016
(73) Patentinhaber: Siemens Aktiengesellschaft, 80333 München (DE)
(72) Erfinder: DEISS, Olga, 40627 Düsseldorf (DE); JASPERS, Meike, 46117 Oberhausen (DE); LAPP, Patrick, 10367 Berlin (DE); LEHMANN, Christoph, 47506 Neukirchen-Vluyn (DE); MATTES, Alexander, 14532 Kleinmachnow (DE); REHME, Olaf, 20148 Hamburg (DE); WILKES, Jan, 23570 Lübeck (DE)
(86) Internationale Anmeldenummer: PCT/EP2014/059006
(87) Internationale Veröffentlichungsnummer: WO 2014/195068

(56) Entgegenhaltungen:
- EP-A1- 1 358 994
- WO-A2-2004/106041
- DE-A1- 10 235 434
- DE-A1-102010 041 284
- US-A- 5 876 550

## Beschreibung

Die Erfindung betrifft eine Anlage zum selektiven Laserschmelzen mit einer Prozesskammer, in der ein Träger für ein herzustellendes Werkstück und ein Pulververteiler zur Erzeugung eines Pulverbettes vorgesehen sind, wobei der Pulververteiler und der Träger der Achse drehbar angeordnet sind.

Eine derartige Anlage ist beispielsweise aus der DE 10 2010 041 284 A1 bekannt. Hierbei handelt es sich um eine Anlage zum selektiven Laserschmelzen, in der ein Pulververteiler in einer Prozesskammer an einer Stange aufgehängt ist, deren Symmetrieachse sich genau in der geplanten Drehachse des Pulververteilers befindet. Der Pulververteiler kann mittels eines Antriebs um diese Drehachse gedreht werden und gleichzeitig kann der Werkstück-Tisch, der als Träger für das herzustellende Werkstück dient, in der Höhe verstellt werden. Auf diese Weise lassen sich durch schrittweises Absenken des Trägers und durch Drehen des Pulververteilers und einer dahinter befindlichen Rakel, die auch als Beschichter bezeichnet werden kann, die sich ebenfalls dreht, lagenweise ein Pulverbett erzeugen, indem mittels eines Lasers Lagen eines herzustellenden Werkstücks aufgeschmolzen werden können. Dieser Herstellungsprozess wird als selektives Laserschmelzen bezeichnet. Eine Alternative für den Betrieb sieht vor, dass der Träger kontinuierlich abgesenkt wird, während sich der Pulververteiler kontinuierlich dreht. Wenn diese beiden Bewegungen aufeinander abgestimmt werden, so dass die Absenkung des Trägers bei einer Drehung des Pulververteilers um 360° gerade eine Lagendicke beträgt, lässt sich eine kontinuierliche Fertigung für die herzustellenden Werkstücke erreichen. Das heißt, dass die Bearbeitung mittels des Lasers nicht unterbrochen wird, um eine neue Lage im Pulverbett zu erzielen, sondern dass die Erzeugung des Pulverbetts und die Herstellung des Werkstücks mittels des Lasers simultan erfolgt.

Bei der Herstellung des Pulverbetts können Fehler auftreten, die dazu führen, dass die durch die Rakel hergestellte Oberfläche des Pulverbetts nicht absolut eben ist. Hierfür können unterschiedliche Ursachen genannt werden. Es können Versetzungen im Pulverbett auftreten. Bei der Laserbehandlung können Spritzer der Metallschmelze entstehen, die sich auf der Oberfläche des Pulverbetts absetzen. Die Lippe des Beschichters kann verschlissen oder verletzt werden, so dass sich die mechanischen Beschädigungen im Pulverbett abzeichnen. Die Aufgabe der Erfindung besteht darin, eine Anlage zum selektiven Laserschmelzen, bei der eine drehende Relativbewegung zwischen Pulververteiler und Pulverbett erfolgt, dahingehend zu verbessern, dass die Ausbildung des Pulverbetts weniger fehlerbehaftet ist.

Gemäß der DE 102 35 434 A1 ist eine Anlage zum selektiven Laserschmelzen gemäß dem Oberbegriff des Anspruchs 1 beschrieben. Diese Anlage weist eine Prozesskammer auf, in der in einem topfförmigen Träger ein herzustellendes Werkstück erzeugt werden kann. Zur Herstellung eines Pulverbettes in dem Träger ist ein Pulververteiler vorgesehen, wobei der Pulververteiler und der Träger drehbar zueinander angeordnet sind. Der topfförmige Träger besteht aus einer kreisförmigen Bodenplatte und einer Wandung in Form eines Zylindermantels am Rande der Bodenplatte, wobei die Drehachse durch den Mittelpunkt der Bodenplatte verläuft.

Diese Aufgabe wird mit der eingangs angegebenen Anlage erfindungsgemäß dadurch gelöst, dass der Träger topfförmig aufgebaut ist, mit einer kreisförmigen Bodenplatte als Basis für das herzustellende Werkstück, und mit einer Wandung, die in Form eines Zylindermantels die Bodenplatte an ihrem Rand begrenzt. Dabei verläuft die senkrechte Achse durch den Mittelpunkt der Bodenplatte und der Pulververteiler erstreckt sich waagerecht von der senkrechten Achse zur Wandung. Der topfförmige Aufbau des Trägers bewirkt vorteilhaft, dass sich bei einer Drehung des Trägers die zylindrische Wand ebenfalls mitdreht. Daher kommt es nicht zu einer Relativbewegung zwischen der Wand der Prozesskammer, in der das Pulverbett hergestellt wird, und dem sich drehenden Boden der Prozesskammer, der als Basis für die herzustellenden Werkstücke dient. Eine solche Relativbewegung würde nämlich die Versetzungs- und Verschiebungsbewegungen von Pulverteilchen untereinander befördern und somit die Qualität der Oberfläche des Pulverbetts vermindern. Erfindungsgemäß wird das Pulver jedoch sozusagen in einen Topf eingefüllt, wo es von äußeren Einflüssen weitgehend geschützt ist. Der Pulververteiler sowie der Beschichter, der eine Glättung der Oberfläche des Pulververteilers bewirkt, werden von oben in die Öffnung des Topfes eingetaucht, wobei sich der topfförmige Träger während des Verfahrensablaufs des selektiven Laserschmelzens langsam mit Pulver füllt. Hierbei entstehen im entstehenden Pulverbett gleichzeitig durch Aufschmelzen mittels des Lasers die herzustellenden Werkstücke.

Gemäß einer Ausgestaltung der Erfindung ist vorgesehen, dass der Träger um die senkrechte Achse drehbar ist und der Pulververteiler höhenverstellbar ist. Hier werden die notwendigen Relativbewegungen zwischen Pulververteiler und Pulverbett auf die beiden Werkstücke des Trägers und des Pulververteilers aufgeteilt. Eine Abstimmung der Bewegungen untereinander erfolgt in an sich bekannter Weise, wie oben bereits beschrieben.

Zum Pulververteiler gehört eine Dosierungseinrichtung für das Pulver und ein Beschichter. Die Dosierungseinrichtung weist bevorzugt eine schlitzförmige Öffnung auf, durch die das Pulver aus einem Pulvervorrat, also einem Behälter, vorzugsweise radial auf der Oberfläche des Pulverbettes verteilt wird. Hierdurch ist vorläufig bereits eine vergleichsweise gleichmäßige Verteilung des Pulvers möglich. Um diese Verteilung weiter zu vergleichmäßigen und insbesondere auch eine ebene Oberfläche des Pulverbettes zu erzeugen, wird das Pulverbett nach Zudosierung neuen Pulvers mittels des Beschichters (Rakel) geglättet. Der Beschichter muss sich hierzu genau auf dem Niveau der herzustellenden Oberfläche des Pulverbetts befinden. Dies wird durch die Höhenverstellung des Pulververteilers erreicht. Die Dosiereinrichtung selbst muss dabei nicht zwangsläufig höhenverstellbar sein. Dies ist jedoch von Vorteil, da eine höhenverstellbare Dosiereinrichtung immer einen konstanten Abstand zur Oberfläche des Pulverbetts hat, so dass ein gleichmäßiges Verteilungsverhalten des Pulvers beispielsweise durch ein Rieseln über den Dosierschlitz erreicht werden kann.

Gemäß einer anderen Ausgestaltung der Erfindung ist vorgesehen, dass der Träger höhenverstellbar und um die senkrechte Achse drehbar ist. Bei dieser Ausführung der erfindungsgemäßen Anlage kann der Pulververteiler vorteilhaft ortsfest in der Anlage angeordnet sein. Hierbei entfällt der mechanische Aufwand einer drehbaren und/oder höhenverstellbaren Anordnung. Anstelle dessen wird der topfförmige Träger sowohl in seiner Höhe als auch in seiner Winkellage um die Drehachse beweglich gelagert und in geeigneter Weise angetrieben.

Gemäß einer besonderen Ausgestaltung der Erfindung ist vorgesehen, dass ein spindelförmiger Antrieb vorgesehen ist, wobei dieser bei einer vollständigen Drehung des Trägers eine Absenkung desselben um eine Lagendicke des Pulverbettes gewährleistet. Hierbei liegt vorteilhaft eine mechanische Kopplung vor, wie diese für einen kontinuierlichen Betrieb der Anlage oben bereits genauer erläutert worden ist. Der spindelförmige Antrieb kann durch eine mechanische Kopplung erreicht werden, die tatsächlich eine Antriebsspindel verwendet. Bei dieser ist allerdings die Steigung des spindelförmigen Antriebs konstruktiv festgelegt. Das heißt, dass die Dicke des Pulverbetts bei einer vollständigen Umdrehung des Trägers feststeht. Eine andere Möglichkeit ist dadurch gegeben, dass der spindelförmige Antrieb durch eine geeignete Ansteuerung unabhängiger Antriebe erfolgt. Bei dem einen Antrieb handelt es sich um einen Drehmotor, während der andere Antrieb ein Linearmotor ist. Diese beiden Motoren können unabhängig voneinander angesteuert werden, wobei eine Synchronisation der Bewegungen zu dem spindelförmigen Antrieb des Trägers führt. Vorteilhaft kann eine solche Kombination von Motoren auch verwendet werden, um die beiden erforderlichen Bewegungen voneinander zu entkoppeln und jeweils eine Absenkung des Trägers um eine Pulverbettlage zu bewerkstelligen, wenn sich der Träger einmal um 360° gedreht hat, oder wenn schon vor Abschluss einer Drehung von 360° bereits alle aufzuschmelzenden Flächen der aktuellen Lage des Pulverbettes durch den Laser bearbeitet wurden.

Weiterhin ist es vorteilhaft, wenn der Pulververteiler einen Pulverbehälter mit einem sich waagerecht von der senkrechten Achse zur Wandung erstreckenden Dosierschlitz aufweist. Dadurch kann das Pulverbett gleichmäßig aufgebaut werden, indem dieses radial vom Mittelpunkt zum Rand hin einen Nachschub an Pulver bekommt. Genauso ist es vorteilhaft, wenn der Pulververteiler einen sich waagerecht von der senkrechten Achse zur Wandung erstreckender Beschichter aufweist, die in Drehrichtung gesehen hinter dem Pulverbehälter angeordnet ist. Dies bewirkt, dass das soeben zudosierte Pulver sofort vergleichmäßigt werden kann, um eine ebene Oberfläche des Pulverbetts zu erhalten. Auch ist ein radialer Verlauf des Beschichters von Vorteil, weil sich ein Glattstreichen bei der erfindungsgemäß vorgesehenen drehenden Relativbewegung leicht erreichen lässt.

Zuletzt ist es vorteilhaft, dass ein Laser vorgesehen wird, dessen Laserstrahl nur um eine Achse schwenkbar ist, derart, dass der Laserstrahl das Pulverbett ebenfalls radial auf einer die senkrechte Achse schneidenden Gerade bestreicht. Dadurch, dass durch die drehende Relativbewegung alle Punkte des Pulverbetts grundsätzlich unter einer solchen die senkrechte Achse schneidenden Geraden hindurch gefahren werden können, können in dem Pulverbett beliebige Werkstücke hergestellt werden. Hierbei kann der mechanische Aufwand einer zweiachsigen Umlenkung des Lasers eingespart werden, indem die Drehung des Pulverbetts die Schwenkung des Lasers um eine der Achsen ersetzt. Diese Lösung ist daher besonders kostengünstig und zudem vorteilhaft mit geringen Fertigungstoleranzen behaftet.

Weitere Einzelheiten der Erfindung werden nachfolgend anhand der Zeichnung beschrieben. Gleiche oder sich entsprechende Zeichnungselemente sind in den einzelnen Figuren mit den gleichen Bezugszeichen versehen und werden nur insoweit mehrfach erläutert, wie sich Unterschiede zwischen den einzelnen Figuren ergeben. Es zeigen:
- Figur 1: ein Ausführungsbeispiel einer erfindungsgemäßen Anlage, teilweise aufgeschnitten und teilweise dreidimensional dargestellt und
- Figur 2 und 3: schematisch verschiedene Relativbewegungen zwischen Pulverdosierer und Träger.

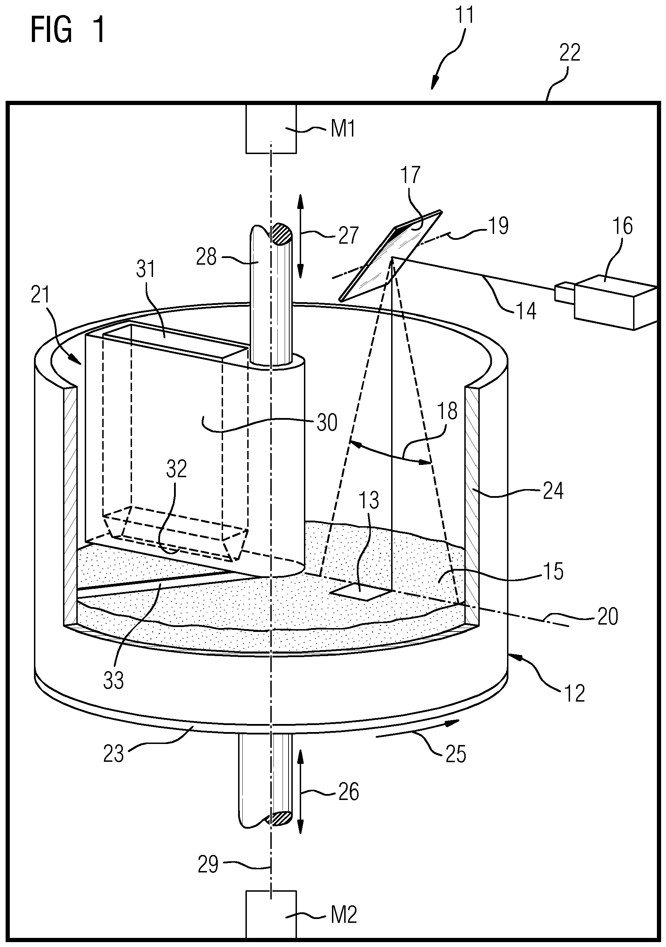

In Figur 1 ist schematisch eine Anlage 11 zum Laserschmelzen dargestellt. Diese weist einen Träger 12 auf, in dem ein Werkstück 13 mittels eines Laserstrahls 14 lagenweise in einem Pulverbett 15 hergestellt werden kann. Zu diesem Zweck kann der von einem Laser 16 ausgesendete Laserstrahl 14 über einen Umlenkspiegel 17 innerhalb eines Schwenkbereiches 18 umgelenkt werden, indem der Umlenkspiegel 17 um eine Drehachse 19 geschwenkt wird. Innerhalb des Schwenkbereichs 18 kann der Laserstrahl 14 damit das Pulverbett auf einer Geraden 20 bestreichen, die auf einem Radius des kreisrunden Pulverbetts 15 liegt. Der Verlauf der Drehachse 19 und der Geraden 20 ist somit senkrecht zueinander.

Der Träger 12 ist gemeinsam mit dem Laser 16, dem Umlenkspiegel 17, einem Pulverteiler 21 und zwei Antriebsmotoren M1, M2 in einer evakuierbaren Prozesskammer 22 untergebracht. Der Träger weist eine kreisrunde Bodenplatte 23 auf, die als Bauplattform für das herzustellende Werkstück 13 dient. Die Bodenplatte ist umgeben von einer Wandung 24 in Form eines Zylindermantels. Diese Wandung stellt die äußere Begrenzung für das Pulverbett 15 dar, so dass bei einer Drehung des Trägers 12 keine Relativbewegung zwischen den äußeren Rändern des Pulverbetts und der Wandung 24 auftrifft. Mittels des Motors M2 lässt sich der Träger in Richtung des Pfeils 25 drehen und alternativ auch absenken und heben in Richtung des Doppelpfeils 26. Alternativ zur Linearbewegung des Trägers in Richtung des Doppelpfeils 26 lässt sich mittels des Motos M1 auch der Pulververteiler 21 in Richtung des Doppelpfeils 27 heben und absenken. In Figur 1 sind beide linearen Bewegungsalternativen dargestellt. In der Realität ist es selbstverständlich kostengünstiger, wenn nur eine dieser beiden Bewegungsalternativen realisiert wird.

Der Pulververteiler ist mittels einer Stange 28 gehalten. Die Stange liegt genau in der Drehachse 29 des Trägers 12. Der Pulververteiler weist einen Pulverbehälter 30 auf, der über eine Einfüllöffnung 31 mit Pulver beschickt werden kann. Am Boden des Behälters ist ein Dosierschlitz 32 vorgesehen, durch den das Pulver auf das Pulverbett 15 rieseln kann. Aufgrund der Drehbewegung gemäß Pfeil 25 wird das Pulver wegen der radialen Ausrichtung des Dosierschlitzes 32 über die gesamte Fläche des kreisrunden Pulverbetts 15 verteilt. Ein Beschichter 33 sorgt für die Glättung der Oberfläche des Pulverbetts 15, so dass dieses im weiteren Verlauf mittels des Laserstrahls 14 bearbeitet werden kann.

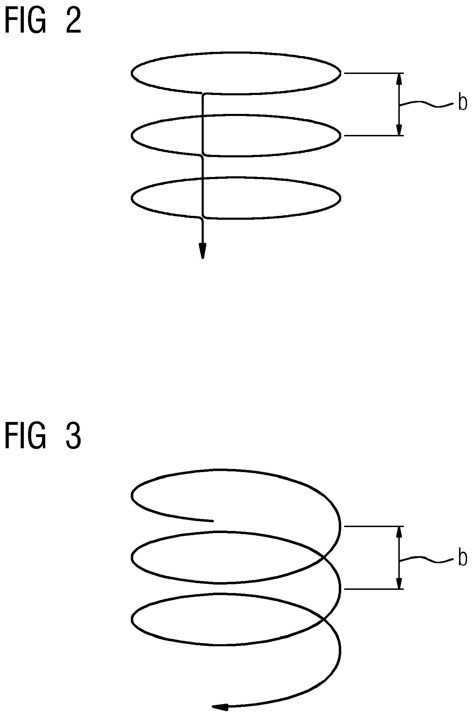

Die Figuren 2 und 3 zeigen die bereits beschriebenen Betriebsregime für den Träger. Gemäß Figur 2 ist es möglich, dass der Träger entsprechend Pfeil 25 jeweils eine vollständige Drehung um 360° durchführt, um dann um den Betrag b der Pulverlagendicke abgesenkt zu werden. Anschließend wird wieder eine Drehung um 360° vollzogen. In Figur 2 ist durch einen wendelförmigen Pfeil angedeutet, dass die Absenkung des Pulverbetts während der Drehung auch kontinuierlich erfolgen kann. Die Steigung des wendelförmigen Pfeils beträgt ebenfalls die Dicke einer Lage des Pulverbetts b.

## Patentansprüche

1. Anlage zum selektiven Laserschmelzen mit einer Prozesskammer, (22) in der ein Träger (12) für ein herzustellendes Werkstück (13) und ein Pulververteiler (21) zur Erzeugung eines Pulverbettes (15) vorgesehen sind, wobei
- der Pulververteiler (21) und der Träger (12) um eine senkrechte Achse drehbar zueinander angeordnet sind,
- der Träger topfförmig aufgebaut ist, mit einer kreisförmigen Bodenplatte (23) als Basis für das herzustellende Werkstück (13), und einer Wandung (24), die in Form eines Zylindermantels die Bodenplatte (23) an ihrem Rand begrenzt,
- der Träger (12) um die senkrechte Achse drehbar ist und
- die senkrechte Achse durch den Mittelpunkt der Bodenplatte (23) verläuft,
**dadurch gekennzeichnet,**
**dass** der Pulververteiler (21) sich waagerecht von der senkrechten Achse zur Wandung (24) erstreckt und von oben in die Öffnung des topfförmigen Trägers eintaucht.

2. Anlage nach Anspruch 1,
**dadurch gekennzeichnet,**
**dass** der Pulververteiler (21) höhenverstellbar sind.

3. Anlage nach Anspruch 1,
**dadurch gekennzeichnet,**
**dass** der Träger (12) höhenverstellbar ist.

4. Anlage nach Anspruch 3,
**dadurch gekennzeichnet,**
**dass** ein spindelförmiger Antrieb vorgesehen ist, wobei dieser bei einer vollständigen Drehung des Trägers (12) ein Absenkung desselben um eine Lagendicke des Pulverbettes (15) gewährleistet.

5. Anlage nach einem der voranstehenden Ansprüche,
**dadurch gekennzeichnet,**
**dass** der Pulververteiler (21) einen Pulverbehälter (30) mit einem sich waagerecht von der senkrechten Achse zur Wandung (24) erstreckenden Dosierschlitz (32) aufweist.

6. Anlage nach Anspruch 5,
**dadurch gekennzeichnet,**
**dass** der Pulververteiler einen sich waagerecht von der senkrechten Achse zur Wandung (24) erstreckenden Beschichter (33) aufweist, der in Drehrichtung gesehen hinter dem Pulverbehälter (30) angeordnet ist.

7. Anlage nach einem der voranstehenden Ansprüche,
**dadurch gekennzeichnet,**
**dass** ein Laser (16) mit einer Strahlführung vorgesehen ist, die den Laserstrahl (14) nur um eine Achse ablenken kann, derart, dass der Laserstahl (14) das Pulverbett radial auf einer die senkrechte Achse schneidenden Geraden bestreicht.

## Claims

1. System for selective laser melting having a process chamber (22) in which there are provided a support (12) for a workpiece (13) that is to be produced and a powder distributor (21) for generating a powder bed (15), wherein
- the powder distributor (21) and the support (12) are arranged such that they can be made to rotate with respect to one another about a vertical axis,
- the support is of pot-shaped construction, having a circular base plate (23) as a base for the workpiece (13) that is to be produced, and having a wall (24) which, in the manner of a cylindrical jacket, bounds the rim of the base plate (23),
- the support (12) can be made to rotate about the vertical axis, and
- the vertical axis runs through the centre point of the base plate (23),
**characterized in that**
the powder distributor (21) extends horizontally from the vertical axis to the wall (24) and extends from above into the opening of the pot-shaped support.

2. System according to Claim 1,
**characterized in that**
the powder distributor (21) is height-adjustable.

3. System according to Claim 1,
**characterized in that**
the support (12) is height-adjustable.

4. System according to Claim 3,
**characterized in that**
there is provided a spindle-like drive, which causes the support (12) to be lowered by the thickness of one layer of the powder bed (15) when the support executes a complete rotation.

5. System according to one of the preceding claims,
**characterized in that**
the powder distributor (21) has a powder container (30) with a metering slit (32) which extends horizontally from the vertical axis to the wall (24).

6. System according to Claim 5,
**characterized in that**
the powder distributor has a coater (33) which extends horizontally from the vertical axis to the wall (24) and which is arranged behind the powder container (30) as seen in the direction of rotation.

7. System according to one of the preceding claims,
**characterized in that**
there is provided a laser (16) with a beam guide, which can deflect the laser beam (14) only about one axis such that the laser beam (14) sweeps the powder bed radially along a straight line that intersects the vertical axis.

## Revendications

1. Installation de fusion sélective par laser comprenant une chambre ( 22 ) de processus, dans laquelle sont prévus un support ( 12 ) d'une pièce ( 13 ) à produire et un répartiteur ( 21 ) de poudre pour produire un lit ( 15 ) de poudre, dans laquelle
- le répartiteur ( 21 ) de poudre et le support ( 12 ) sont montés tournants l'un par rapport à l'autre autour d'un axe vertical,
- le support est constitué en forme de pot en ayant une plaque ( 23 ) de fond circulaire comme base pour la pièce ( 13 ) à produire et une paroi ( 24 ) qui, sous la forme d'une enveloppe cylindrique, délimite la plaque ( 23 ) de fond sur son bord,
- le support ( 12 ) peut tourner autour de l'axe vertical et
- l'axe vertical passe par le centre de la plaque ( 23 ) de fond,
**caractérisée**
**en ce que** le répartiteur ( 21 ) de poudre s'étend horizontalement de l'axe vertical à la paroi ( 24 ) et pénètre par le haut dans l'ouverture du support en forme de pot.

2. Installation suivant la revendication 1,
**caractérisée**
**en ce que** le répartiteur ( 21 ) de poudre est réglable en hauteur.

3. Installation suivant la revendication 1,
**caractérisée**
**en ce que** le support ( 12 ) est réglable en hauteur.

4. Installation suivant la revendication 3,
**caractérisée**
**en ce qu'**il est prévu un entraînement en forme de broche, celui-ci assurant, lors d'une rotation complète du support ( 12 ) un abaissement de celui-ci d'une épaisseur de couche du lit ( 15 ) de poudre.

5. Installation suivant l'une des revendications précédentes,
**caractérisée**
**en ce que** le répartiteur ( 21 ) de poudre a un réservoir ( 30 ) de poudre ayant une fente ( 32 ) de dosage s'étendant horizontalement de l'axe vertical à la paroi ( 24 ).

6. Installation suivant la revendication 5,
**caractérisée**
**en ce que** le répartiteur de poudre a un coucheur ( 33 ) s'étendant horizontalement de l'axe vertical à la paroi ( 24 ) et monté, considéré dans le sens de rotation, derrière le réservoir ( 30 ) de poudre.

7. Installation suivant l'une des revendications précédentes,
**caractérisée**
**en ce qu'**il est prévu un laser ( 16 ) ayant un guidage de faisceau, qui peut dévier le faisceau ( 14 ) laser autour d'un axe, seulement de manière à ce que le faisceau ( 14 ) laser balaie le lit de poudre radialement sur une droite coupant l'axe vertical.
